# EUROPÄISCHE PATENTSCHRIFT

(11) **EP 1 121 646 B1**
(45) Veröffentlichungstag und Bekanntmachung des Hinweises auf die Patenterteilung: **20.03.2002**
(21) Anmeldenummer: 99953776.4
(22) Anmeldetag: 12.10.1999
(51) Int. Cl.: G06F 13/42

(54) **DATENBUS UND VERFAHREN ZUM KOMMUNIZIEREN ZWEIER BAUGRUPPEN MITTELS EINES SOLCHEN DATENBUSSES**
DATA BUS AND METHOD FOR ESTABLISHING COMMUNICATION BETWEEN TWO MODULES BY MEANS OF SUCH A DATA BUS
BUS DE DONNEES ET PROCEDE POUR FAIRE COMMUNIQUER DEUX MODULES AU MOYEN D'UN TEL BUS DE DONNEES

(30) Priorität: 12.10.1998 DE 19846914
(43) Veröffentlichungstag der Anmeldung: 08.08.2001
(73) Patentinhaber: Océ Printing Systems GmbH, 85586 Poing (DE)
(72) Erfinder: BAUMGARTNER, Robert, D-85457 Wörth (DE); HERSCH, Norbert, D-81476 München (DE)
(74) Vertreter: Schaumburg, Karl-Heinz
(86) Internationale Anmeldenummer: EP9907632
(87) Internationale Veröffentlichungsnummer: WO0025225

(56) Entgegenhaltungen:
- EP-A- 0 287 119
- WO-A-92/21088
- US-A- 5 572 687

## Beschreibung

Die Erfindung betrifft einen parallelen Datenbus und ein Verfahren zum Kommunizieren zweier Baugruppen mittels eines solchen Datenbusses. Insbesondere bezieht sich die Erfindung auf einen parallelen Datenbus, der für eine Multiprozessor-Architektur geeignet ist. Bei einer solchen Multiprozessor-Architektur können mehrere, grundsätzlich gleichberechtigte Prozessorsysteme über den Datenbus miteinander kommunizieren.

Ein derartiger Datenbus ist der Multibus II (Multibus ist eine eingetragene Marke der Intel Corp.). Der Multibus II ist ein synchronisierter Bus, der in IEEE Standard for a High-Performance Synchronous 32-Bit Bus: MULTIBUS II, The Institute of Electrical and Electronics Engineers, Inc., 345 East 47^{th} Street, NY 10017, USA, 1988 festgelegt ist. Im Nachfolgenden wird der "MULTIBUS II" vereinfacht als "Multibus" bezeichnet.

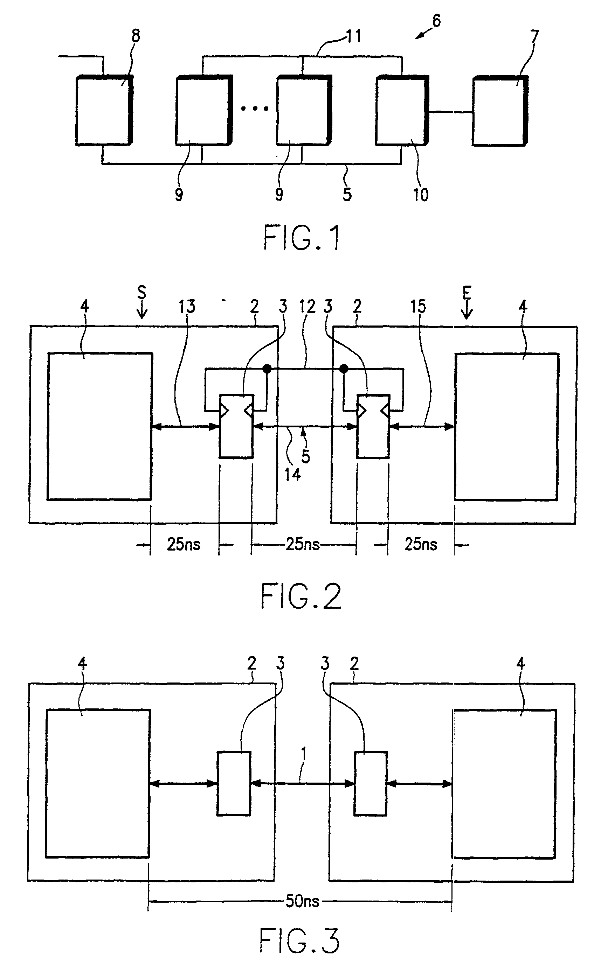

Die Hardwarerealisierung eines solchen Multibusses besteht aus einer Backplan, in welcher die Signalleitungen des Busses angeordnet sind und welche mit ca. 20 Steckleisten versehen ist, an die jeweils eine Baugruppe angeschlossen werden kann. In Fig. 3 sind schematisch zwei über einen Multibus 1 verbundene Baugruppen 2 gezeigt. Jede Baugruppe 2 besitzt einen unmittelbar an den Signalleitungen des Multibusses 1 angeschlossenen Datenbustreiber 3 und einen mit dem Datenbustreiber 3 verbundenen Controller 4. Der Controller 4 ist wiederum mit den elektronischen Baueinheiten der Baugruppe 2 verbunden. Diese elektronischen Baueinheiten können einen Prozessor aufweisen oder lediglich eine passive digitale Schaltung darstellen.

Der Controller 4 bereitet die von den elektronischen Baueinheiten erzeugten Daten logisch, gemäß dem Protokoll des Multibusses 1 auf und reicht sie an den Datenbustreiber 3 weiter. Der Datenbustreiber 3 setzt die Daten in die für den Multibus geeigneten elektrischen Datensignale um und legt die elektrischen Datensignale an die Signalleitungen an. Von dem Multibus 1 kommende Datensignale werden in umgekehrter Weise von dem Datenbustreiber aufgenommen, der die Daten an den Controller 4 weitergibt. Der Controller 4 bereitet die Daten zur Verarbeitung durch die elektronischen Baueinheiten entsprechend auf.

Die Datenbustreiber sind transparente elektronische Bauteile, d.h., daß die jeweilige korrespondierende Eingangs- und Ausgangsseite der Datenbustreiber den gleichen logischen Wert annimmt. Da die Datenbustreiber transparent ausgebildet sind, wird eine aktive Verbindung zwischen zwei Baugruppen 2 logisch von dem Controller 4 der einen Baugruppe 2 zu dem Controller 4 der anderen Baugruppe 2 durchgeschaltet.

Die Signallaufzeit zwischen den beiden Controllern 4 begrenzt die maximale Übertragungs- bzw. Busfrequenz. Gemäß dem oben erwähnten IEEE-Standard beträgt die Busfrequenz 10 MHz. Mit einer solchen Busfrequenz wird eine Übertragungsrate von 40 MByte/s erreicht.

Gemäß einer Studie "20MHZ MULTIBUS II PARALLEL SYSTEM BUS INVESTIGATION, TAUFIK MA, INTEL CORPORATION, APRIL 8, 1991" wurde geplant, den Multibus mit einer Busfrequenz von 20 MHz zu betreiben. Hierzu wurden umfangreiche Anpassungen und Modifikationen vorgeschlagen, um die einzelnen Laufzeiten zwischen den Controllern und Datenbustreibern bzw. zwischen den über den Multibus verbundenen Datenbustreibern zu optimieren. Diese Studie hat als Ziel einen Multibus mit maximal 10 Baugruppen mit 20 MHz und einen Multibus mit maximal 20 Baugruppen mit 16 MHz zu betreiben.

Bei einer Busfrequenz von 20 MHz müßte die Signallaufzeit zwischen den Controllern zweier Baugruppen auf 50 ns oder weniger verringert werden. Das Ergebnis dieser Studie ist, daß ein derartig "beschleunigter" Multibus theoretisch möglich wäre, jedoch noch ein beträchtlicher Entwicklungsaufwand bis zu seiner tatsächlichen Realisierung besteht. Jüngere Datenbusse, wie z.B. der PCI-Bus, weisen keine Bustreiber auf, um einen schnelleren Zugriff auf die Signalleistungen des Datenbusses und damit ein höherer Durchsatz erzielen zu können. Diese Datenbusse sind jedoch in der Anzahl der maximal anzuschließenden Baugruppen, die in der Regel deutlich kleiner als 10 ist, begrenzt und deren physikalische Ausdehnung ist auf bspw. 10 cm begrenzt. Ein Multibus kann hingegen bis zu 50 cm lang sein und 20 Baugruppen miteinander verbinden, wobei mehrere Baugruppen gleichberechtigte Prozessorsysteme darstellen können.

Funktionen und Strukturen von Bussystemen sind bei "Färber, G., Bussysteme, R. Oldenbourg Verlag, München 1987 (2. Aufl.)" auf Seiten 16-19 beschrieben. Auf Seite 19 zeigt Bild 13 eine Handshake-Übertragung. In dem Artikel "Packer, Stephen et. al., Message Passing Supports Multiple Processor Design, Computer Design vom 15.06.1984, Seiten 117-120, 122 und 124 sind Maßnahmen zur Verbesserung der Kommunikation im Multibus II beschrieben.

Der Erfindung liegt die Aufgabe zugrunde, einen parallelen Datenbus zu schaffen, der bei Beibehaltung der Vorteile des bekannten Multibusses, wie z.B. der hohen Anzahl anschließbarer Baugruppen, der großen physikalischen Ausdehnung und der Möglichkeit einer Multiprozessor-Architektur, einen hohen Datendurchsatz erlaubt. Eine weitere Aufgabe der vorliegenden Erfindung ist ein Verfahren zum Kommunizieren zweier jeweils mit einem Prozessor versehenen Baugruppen mittels eines solchen Datenbusses zu schaffen.

Die Aufgabe wird durch einen parallelen Datenbus mit den Merkmalen des Anspruchs 1 und durch ein Verfahren mit den Merkmalen des Anspruchs 13 gelöst. Vorteilhafte Ausgestaltungen der Erfindung sind in den Unteransprüchen angegeben.

Der erfindungsgemäße parallele Datenbus weist mehrere parallele Signalleitungen auf, an welche mehrere Baugruppen anschließbar sind, wobei jede Baugruppe einen unmittelbar mit den Signalleitungen in Verbindung stehenden Datenbustreiber und einen mit dem Datenbustreiber verbundenen Controller aufweist, wobei eine Teilzahl der Signalleitungen Datenleitungen zum Übertragen der Daten und Steuerleitungen zum Steuern der Datenübertragung der Daten über die Datenleitungen darstellt, und ist mit einem Taktgeber zum Erzeugen einer vorbestimmten Busfrequenz versehen, mit welcher die in den Signalleitungen übertragenen Signale getaktet sind. Dieser parallele Datenbus zeichnet sich dadurch aus, daß die Datenbustreiber mit dem Taktgeber verbunden sind und die Datenbustreiber so ausgebildet sind, daß die von und zu den Datenund Steuerleitungen zu übertragenen Signale während eines vom Taktgeber vorgegebenen Taktes aufgenommen und während des nachfolgenden Taktes abgegeben werden. Hierdurch wird ein von einer Baugruppe zu einer anderen Baugruppe zu sendendes Signal während eines ersten Taktes vom Controller der Sender-Baugruppe zum Datenbustreiber der Sender-Baugruppe, während eines zweiten Taktes vom Datenbustreiber der Sender-Baugruppe über die Signalleitungen zum Datenbustreiber der Empfänger-Baugruppe und während eines dritten Taktes vom Datenbustreiber der Empfänger-Baugruppe zum Controller der Empfänger-Baugruppe übertragen. Während eines Taktes werden die Signale lediglich zwischen einem Controller und einem Datenbustreiber einer Baugruppe oder zwischen zwei Datenbustreibern zweier unterschiedlicher Baugruppen übertragen, wodurch der physikalische Signalweg kurz gehalten wird. Diese kurzen Signalwege erlauben entsprechend kurze Signallaufzeiten, die z. B. kleiner oder gleich 25 ns gehalten werden können, so daß ein Bustakt von z.B. 40 MHz möglich ist. Hierdurch wird trotz der Beibehaltung aller vom Multibus bekannten Vorteile eine erhebliche Steigerung des Datendurchsatzes erzielt.

Das im Anspruch 13 angegebene Verfahren zum Kommunizieren zweier jeweils mit einem Prozessor versehenen Baugruppen mittels eines solchen parallelen Datenbusses zeichnet sich dadurch aus, daß beim Austausch von Datenpaketen zwischen den beiden Baugruppen diese lediglich durch einen einzigen Handshake quittiert werden. Hierdurch kann der Handshake über mehrere Takte verteilt ausgeführt werden, während das Datenpaket mit maximaler Übertragungsgeschwindigkeit ( = pro Takt ein Datenwort) übertragen werden kann.

Die Erfindung wird nachfolgend anhand eines in den Zeichnungen dargestellten Ausführungsbeispieles näher erläutert. Es zeigen schematisch:
- Figur 1: eine Druckersteuerung mit einem erfindungsgemäßen Datenbus,
- Figur 2: zwei über einen erfindungsgemäßen Datenbus verbundene Baugruppen,
- Figur 3: zwei über einen bekannten Datenbus verbundene Baugruppen, und
- Figur 4-12: jeweils Timing-Diagramme, die zur Erläuterung der Signalübertragung mittels des erfindungsgemäßen Datenbusses dienen.

Der erfindungsgemäße parallele Datenbus 5 wird nachfolgend anhand einer Druckersteuerung 6 für Hochleistungsdrucker 7 näher erläutert. Eine solche Druckersteuerung 6 weist ein I/O-Modul 8, ein oder mehrerer Rastermodule 9 und ein Serialiser-Modul 10 auf. Die einzelnen Module 8 bis 10 sind über den Datenbus 5 miteinander verbunden. Die Rastermodule 9 und das Serialiser-Modul 10 sind über einen weiteren Pixel-Bus 11 miteinander verbunden.

Das I/O-Modul 8 empfängt die Druckinformationen von einer Computereinrichtung, die ein Großrechnersystem oder auch ein Rechnernetzwerk sein kann. Die Druckinformation wird von dem I/O-Modul 8 an die Rastermodule 9 und das Serialiser-Modul 10 weitergeleitet, wobei die Rastermodule 9 die Druckbildinformationen empfangen und zu einem von dem Hochleistungsdrucker 7 verarbeitbaren Druckbilddatenstrom umsetzen. Diese Druckbilddatenströme werden von den Rastermodulen 9 über den Pixel-Bus 11 an das Serialiser-Modul 10 übertragen, das die Datenströme in einer vorbestimmten Folge aufreiht und an den Hochleistungsdrucker 7 weiterleitet.

Die Module 8 bis 10 stellen jeweils mit dem Datenbus 5 verbundene Baugruppen 2 dar, wobei jede Baugruppe einen Datenbustreiber 3 und einen Controller 4 aufweist (Figur 2). Der Datenbus 5 entspricht dem Multibus II (Multibus ist eine eingetragene Marke der Intel Corp.), wie er in IEEE Standard for High Performance Synchronous 32-Bit Bus: MULTIBUS II The Institute of Electrical and Electronics Engineers, Inc., 345 East 47^{th} Street, NY 10017, USA, 1998, festgelegt ist, bis auf die in der nachfolgenden Beschreibung angegebenen Änderungen.

Die Hardwarerealisierung dieses Datenbusses 5 besteht aus einer Backplan, in welcher die Signalleitungen des Busses angeordnet sind und welche mit 20 bis 25 Steckleisten versehen ist, an die jeweils eine Baugruppe 2 angeschlossen werden kann. Eine solche Baugruppe ist das vom Multibus bekannte CSM-Modul (Central Services Modul), das bestimmte Startroutinen ausführt und die einzelnen Baugruppen initialisiert. Das CSM-Modul weist einen Taktgeber auf, der an eine Taktsignalleitung des Datenbusses 5 ein mit einer vorbestimmten Busfrequenz schwingendes Taktsignal anlegt. Im vorliegenden Ausführungsbeispiel beträgt die Busfrequenz 40 MHz.

An die Taktsignalleitung 12 sind die Datenbustreiber 3 einer jeden Baugruppe 2 angeschlossen, wobei die Ein- und Ausgabe der Datenbustreiber 3 gemäß der Busfrequenz bzw. gemäß dem Bustakt getaktet werden.

Neben der Taktsignalleitung 12 weist der Datenbus 5 weitere Leitungen, wie z.B. 32 Datenleitungen zum Übertragen der Daten, Steuerleitungen zum Steuern der Datenübertragung, Entscheidungsleitungen zum Entscheiden (Arbitrierung), welchen Baugruppe auf den Datenbus 5 zugreifen darf, Adressleitungen und eine oder mehrere Leitungen für die Versorgungsspannung und die Masse auf. Im vorliegenden Ausführungsbeispiel werden zur Übertragung der Adressen und der Daten die gleichen Leitungen verwendet, so daß kombinierte Adress/Datenleitungen vorliegen.

Erfindungsgemäß sind die Datenbustreiber 3 mit der Taktsignalleitung 12 verbunden und so ausgebildet, daß die von und zu den Daten- und Steuerleitungen zu übertragenden Signale während eines vom Taktgeber vorgegebenen Taktes aufgenommen und während des nachfolgenden Taktes abgegeben werden. Der Teil der Datenbustreiber 3, der die Daten- und Steuerleitungen bedient, ist somit als nicht-transparentes elektronisches Bauteil mit einer Zwischenspeicherfunktion ausgebildet, wie sie beispielsweise durch ein D-Flip-Flop realisiert werden kann. Diese Datenbustreiber 3 nehmen somit während eines Taktes die vom Datenbus 5 kommenden Signale der Daten- und Steuerleitungen auf, speichern sie ab und geben sie während des unmittelbar nachfolgenden Taktes an den jeweiligen Controller 4 ab bzw. nehmen während eines Taktes ein vom Controller 4 kommendes Signal auf, speichern es ab und legen es am unmittelbar nachfolgenden Takt am Datenbus 5 an. Die Datenbustreiber 3 werden somit bezüglich der Daten- und Steuerleitungen "getaktet" betrieben.

Zur Erläuterung wird nachfolgend angenommen, daß die in Figur 2 auf der linken Seite gezeigte Baugruppe (Sender-Baugruppe S) einen Datentransfer an die auf der rechten Seite gezeigte Baugruppe (Empfänger-Baugruppe E) einleitet. Die Sender-Baugruppe erlangt zunächst in einem vom Multibus bekannten Entscheidungsverfahren (Arbitrierung) das Recht auf den Datenbus 5 zugreifen zu dürfen. Die Sender-Baugruppe S wird deshalb auch als Busbesitzer (Busowner) bezeichnet.

Der Controller 4 der Sender-Baugruppe S überträgt während eines ersten Taktes ein Datenwort (1 - 4 Byte) zum Datenbustreiber der Sender-Baugruppe S. Der Datenbustreiber 3 speichert das Datenwort und setzt es in ein für den Datenbus 5 geeignetes Signal um, das während des folgenden, zweiten Taktes an den Signalleitungen des Datenbusses 5 anliegt. Diese elektrischen Datensignale werden von dem Datenbustreiber 3 der Empfänger-Baugruppe 2 während des zweiten Taktes aufgenommen, zwischengespeichert und während des nachfolgenden, dritten Taktes an den Controller 4 der Empfänger-Baugruppe E übertragen.

Diese getaktete Übertragung der Signale unterteilt den gesamten Übertragungsweg vom Controller 4 der Sender-Baugruppe S zum Controller 4 der Empfänger-Baugruppe E in drei Abschnitte, nämlich die beiden Abschnitte 13, 15 zwischen den Controllern 4 und den Datenbustreibern 3 der jeweiligen Baugruppe 2 und den Abschnitt 14 zwischen den beiden Datenbustreibern 3 der beiden Baugruppen 2, der sich über die Signalleitungen des Datenbusses 5 erstreckt. Die Signallaufzeit in den einzelnen Abschnitten ist wesentlich kürzer, als über die gesamte Strecke zwischen zwei Controllern, wie es bei transparenten Datenbustreibern notwendig ist, um das am Controller der Sender-Baugruppe erzeugte Signal so lange aufrecht zu erhalten, bis es am Controller der Empfänger-Baugruppe anliegt. Bei einer solchen Ausführungsform eines Datenbusses kann durch die erfindungsgemäß verkürzten Signallaufzeiten der einzelnen Abschnittet die beispielsweise 25 ns betragen können, die Busfrequenz wesentlich erhöht werden (z.B. auf 40 MHz). Mit einer Busfrequenz von 40 MHz können Datenübertragungsraten bis zu 160 MByte/s erreicht werden.

Die Datenbustreiber können z.B. mit den GTL+-Treibern der Firma Texas Instruments, wie z.B. dem Baustein SN54GTL1655 oder SN74GTL1655 ausgebildet sein.

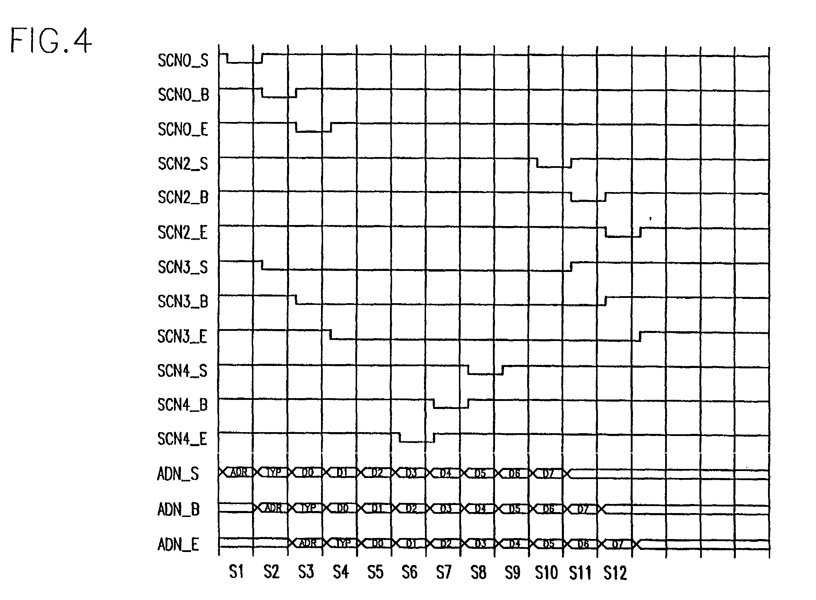

Nachfolgend wird der Betrieb des erfindungsgemäßen Datenbusses anhand der in den Figuren 4 bis 12 dargestellte Timing-Diagramme näher erläutert.

In Figur 4 ist das Timing-Diagramm zur Übertragung eines Datenpaketes zwischen zwei Baugruppen anhand der Steuersignale SCN0, SCN2, SCN3, SCN4, und der Adress/Datensignale ADN dargestellt. Die Bezeichnungen dieser Signale sind jeweils mit einer der folgenden Endungen "_S", "_B" und "_{_}E" versehen, wobei "_S" bedeutet, daß der Signalzustand im Leitungsabschnitt 13 zwischen dem Controller 4 und dem Datenbustreiber 3 der Sender-Baugruppe S dargestellt ist, die Endung "_B" bedeutet, daß der Signalzustand in den Signalleitungen des Datenbusses zwischen den Datenbustreibern 3 der in Kommunikation stehenden Baugruppen (Leitungsabschnitt 14) dargestellt ist, und die Endung "_E" bedeutet, daß das Signal im Leitungsabschnitt 15 zwischen dem Datenbustreiber 3 und dem Controller 4 der Empfänger-Baugruppe E dargestellt ist. Das Signal SCN0 zeigt eine Anfragephase (request phase) an, wobei das Signal im low-Zustand gültig ist (L = request phase). Das Signal SCN3 gibt das Ende der Datenübertragung an, wobei der 0/1-Übergang bzw. low/high-Übergang den exakten Zeitpunkt des Endes der Datenübertragung darstellt. Mit SCN3 ist das Data-Ready-Signal der Sender-Baugruppe bezeichnet, und mit SCN4 ist das Data-Ready-Signal der Empfänger-Baugruppe E bezeichnet. Die beiden Signale SCN3 und SCN4 sind die Hauptbestandteile eines Handshakes zwischen der Sender-Baugruppe S und der Empfänger-Baugruppe E. Dem Handshake sind Signale SCN5, SCN6 und SCN7 zugeordnet, mit welchen in an sich vom Multibus bekannter Weise bei einer fehlerhaften Datenübertragung von der Empfänger-Baugruppe E die Art des Fehlers angezeigt wird.

Die Signale ADN können z.B. 4, 8,16,24 oder 32 Einzelsignale umfassen, wobei die maximale Anzahl durch die 32 Adress/Datenleitungen des Datenbusses 5 begrenzt ist.

Zu Beginn einer Übertragung eines Datenpaketes wird vom Controller 4 der Sender-Baugruppe das Anfrage-Signal SCN0 erzeugt und die Adresse der Empfänger-Baugruppe ausgegeben (siehe S1 in Fig. 4). Diese Signale werden während des nächsten Taktes (S2) vom Datenbustreiber 3 der Sender-Baugruppe an die Signalleitungen des Datenbusses 5 angelegt. Während eines dritten Taktes (S3) erreicht das Anfrage-Signal SCN0 und die Adressdaten den Controller 4 der Empfänger-Baugruppe E, womit diese Empfänger-Baugruppe E erkennt, daß sie ein Datenpaket empfangen soll. Das Signal SCN0 wird lediglich über die Dauer eines Taktes erzeugt. Während des zweiten Taktes S2 erzeugt der Controller 4 der Sender-Baugruppe S ein Data-Ready-Signal SCN3, mit welchem er anzeigt, daß die Sender-Baugruppe S zum Senden eines Datenblockes bereit ist. Gleichzeitig wird an die Adress/Datenleitungen eine Kennung für den Typ des Datenblockes angelegt. Diese Signale erreichen zum Takt S4 den Controller 4 der Empfänger-Baugruppe E. Nach dem Feststellen des Data-Ready-Signals SCN3 durch die Empfänger-Baugruppe E überprüft diese, ob sie zur Aufnahme eines Datenpaketes ausreichend freien Speicherplatz besitzt. Die Größe des Datenpaketes wird bei der Initialisierung des Datenbusses festgelegt und kann 32, 64, 96 oder 128 Byte betragen. Ist an der Empfänger-Baugruppe E ausreichend Speicherplatz zur Aufnahme eines Datenpaketes vorhanden, so erzeugt der Controller 4 der Empfänger-Baugruppe E ein Data-Ready-Signal SCN4, das während dreier Takte (S6 - S8) zum Controller der Sender-Baugruppe S übertragen wird. Zum Aufnehmen des Data-Ready-Signals SCN3 der Sender-Baugruppe S, Überprüfen, ob genügend freier Speicherplatz vorhanden ist, und Ausgeben des Data-Ready-Signals SCN4 benötigt die Empfänger-Baugruppe E zwei Takte. Während des Taktes S8 erreicht das Data-Ready-Signal SCN4 den Controller 4 der Sender-Baugruppe S. Mit dem Empfang dieses Signals durch den Controller 4 der Sender-Baugruppe S ist der Handshake quittiert worden.

Während der Quittierung des Handshakes werden beginnend mit dem Takt S3 bis zum Takt S10 Datenwörter, die in der Regel 32 Bit umfassen, von dem Controller 4 der Sender-Baugruppe S abgesandt. Hierbei wird pro Takt ein solches Datenwort vom Controller 4 abgesandt, die dann jeweils mit zwei Takten Verzögerung (S5 - S12) am Controller 4 der Empfänger-Baugruppe E ankommen. Das Data-Ready-Signal SCN3 der Sender-Baugruppe S ist solange aktiv, bis das letzte Datenwort abgesendet worden ist. Gleichzeitig mit dem Absenden des letzten Datenwortes D7 wird vom Controller 4 der Sender-Baugruppe S das Steuersignal SCN2 aktiviert (low), um an dessen 0/1-Übergang (low/high-Übergang) das exakte Ende der Übertragung des Datenpaketes zu markieren. Wie man in Figur 4 erkennen kann, wird das SCN2-Signal in den einzelnen Übertragungsabschnitten synchron mit dem Datenwort D7 übertragen, so daß das Signal SCN2 während des Taktes S12 von der Empfänger-Baugruppe E und auch von den anderen an die Signalleitungen des Datenbusses 5 angeschlossenen Baugruppen empfangen wird, wodurch diese erkennen, daß die Übertragung des Datenpaketes abgeschlossen ist. Nun kann ein weiteres Datenpaket zwischen der Sender- und Empfänger-Baugruppe übertragen werden oder in einem vom Multibus an sich bekannten Entscheidungsverfahren (Arbitrierung) kann das Recht, auf den Datenbus Signale zugreifen zu dürfen, auf eine andere Baugruppe übertragen werden.

Da erfindungsgemäß jedes Datenpaket, das z.B. 8 Datenwörter umfassen kann, mittels eines einzigen Handshakes übertragen wird, können die Datenwörter D0 - D7 mit maximaler Übertragungsrate (pro Takt eine Datenwort) übertragen werde-, wohingegen für die Verarbeitung des Handshakes ein vergleichsweise langer Zeitraum von z.B. 7 Takten (S2 - S8) zur Verfügung steht.

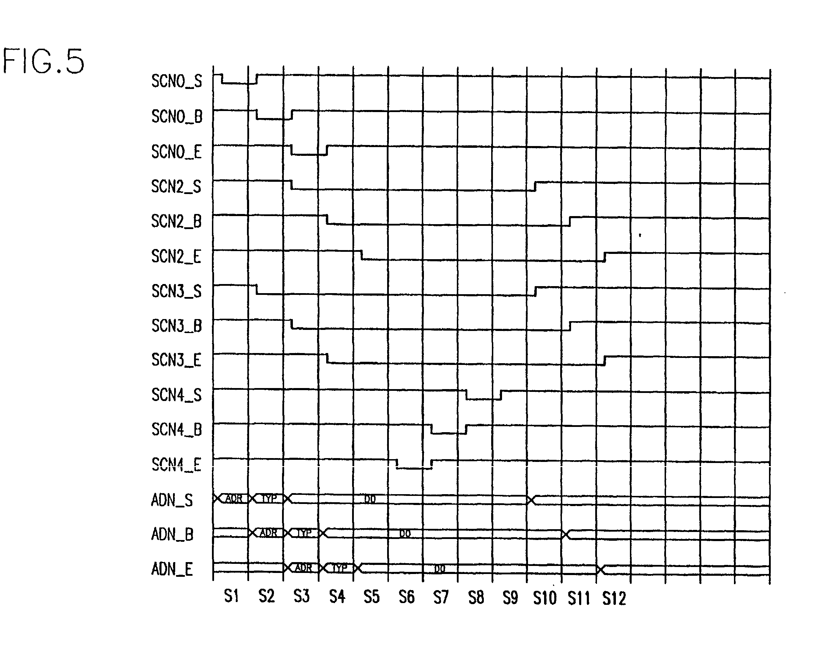

In Figur 5 ist ein ähnliches Diagramm zur Übertragung eines lediglich ein Datenwort D0 aufweisenden Datenpaketes gezeigt. Die Quittierung des Handshakes durch das Signal SCN4 wird, wie bei dem oben anhand von Figur 4 erläuterten Übertragungsvorgang, wieder zum Takt S8 vom Controller 4 der Sender-Baugruppe S empfangen. Erst nachdem der Handshake quittiert ist und dieses Quittierungssignal SCN4 von der Sender-Baugruppe S verarbeitet worden ist (Takt S10), wird die Ausgabe der das Datenwort D0 darstellenden Signale durch den Controller 4 der Sender-Baugruppe S beendet, damit sichergestellt ist, daß die Empfänger-Baugruppe E in der Lage ist, das Datenwort D0 zu empfangen. Da hier lediglich ein Datenwort D0 übertragen wird, ist es das "letzte" Datenwort des Paketes, weshalb das das Ende der Datenübertragung anzeigende Steuersignal SCN2 während der gesamten Zeit, während der die Datensignale des Datenwortes D0 aktiv sind, auch aktiv geschaltet wird (low).

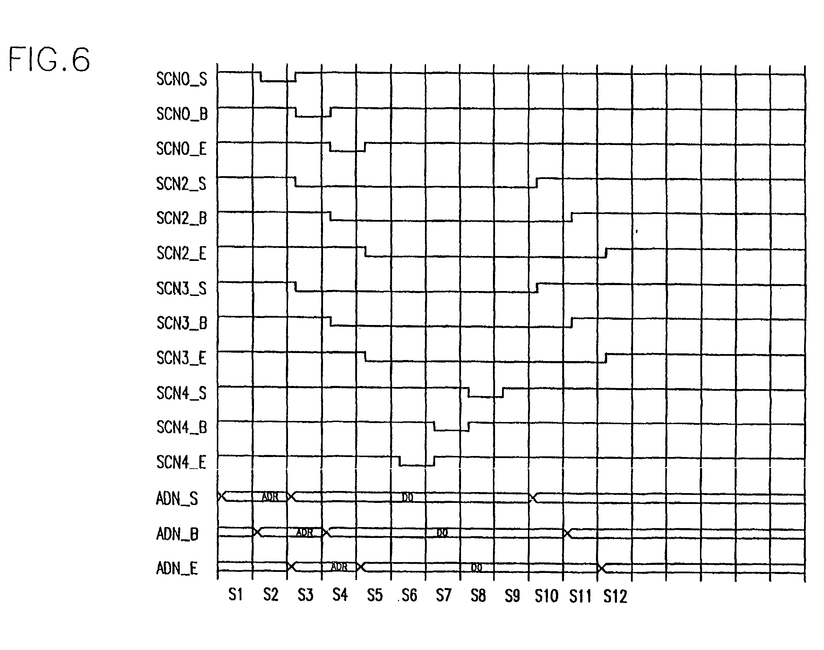

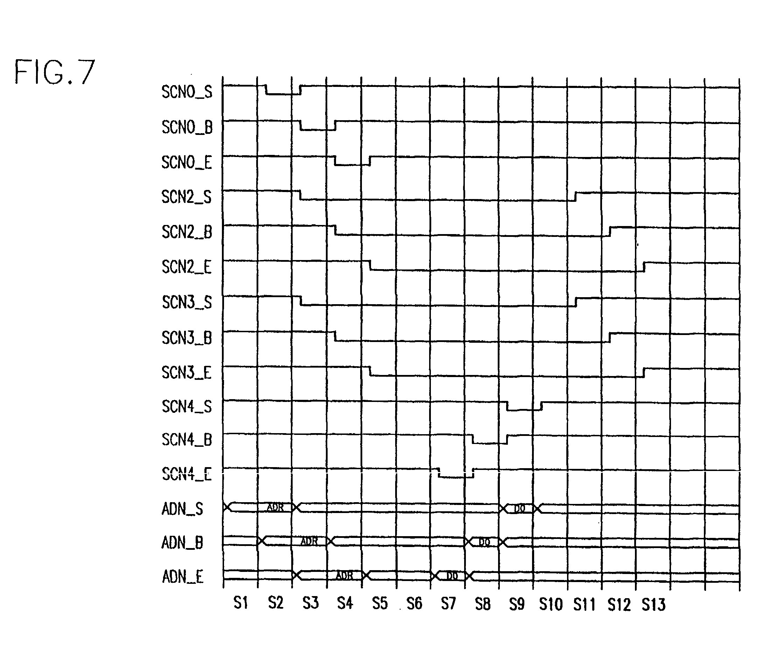

In den Timing-Diagrammen der Figuren 6 und 7 ist ein Referenz-Lesezugriff und ein Referenz-Schreibzugriff gezeigt. Die Referenz-Zugriffe umfassen die sogenannte "I/O-Space Operation" und die "Memory Space Operations", bei welchen jeweils von einer Sender-Baugruppe in ein Register oder eine Speicherzelle einer anderen Baugruppe ein Datenwort geschrieben bzw. aus der Speicherzelle ausgelesen wird.

Beim Referenz-Schreibzugriff (Fig. 6) entspricht der Ablauf der Steuersignale SCN0, SCN2, SCN3 und SCN4 exakt demjenigen beim Übertragen eines Datenpaketes mit einem einzigen Datenwort (Figur 5). Von diesem Datentransfer unterscheidet sich der Referenz-Schreibzugriff lediglich dadurch, daß an den Adress/Datenleitungen zunächst eine aus zwei Datenwörtern bestehende Adresse ADR und danach das zu übertragende Datenwort D0 übertragen wird.

Mit dem Referenz-Lesezugriff (Fig. 7) kann eine einen Datentransfer einleitende Sender-Baugruppe S eine Speicherzelle einer Empfänger-Baugruppe E auslesen. Der Datentransfer wird gleichermaßen wie bei den vorhergehenden Datentransferen durch Einleiten einer Anfragephase mit dem Steuersignal SCN0 und Anlegen einer aus zwei Datenworten bestehenden Adresse ADR an die Adress/Datenleitungen begonnen. Nach der Anfragephase setzt die Sender-Baugruppe S die Steuersignale SCN2 und SCN3, womit sie anzeigt, daß sie zur Aufnahme der Daten von der Empfänger-Baugruppe E bereit ist. Die Empfänger-Baugruppe E sendet ein Datenwort D0 zur Sender-Baugruppe S und zeigt gleichzeitig durch Setzen des Steuersignals SCN4 an, daß die Daten gültig sind. Die Empfänger-Baugruppe E nimmt die Daten D0 und das Steuersignal SCN4 wieder weg, wenn sie die gesetzten Signale SCN2 und SCN3 der Sender-Baugruppe S erkannt hat. Sobald die Sender-Baugruppe S das gesetzte Signal SCN4 erkannt hat, übernimmt sie die Daten D0 und setzt die Steuersignale SCN2 und SCN3 zurück. Der Datentransfer ist damit abgeschlossen.

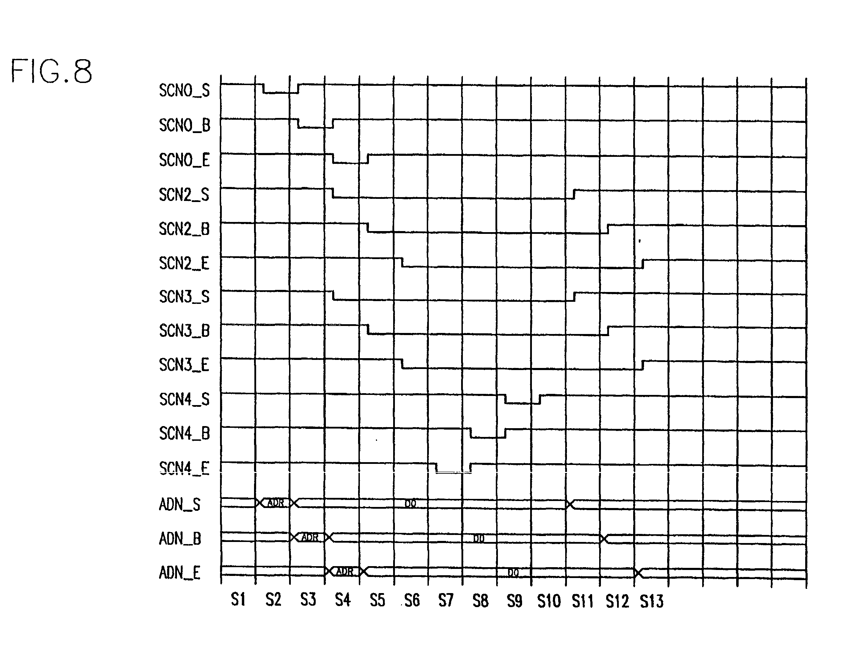

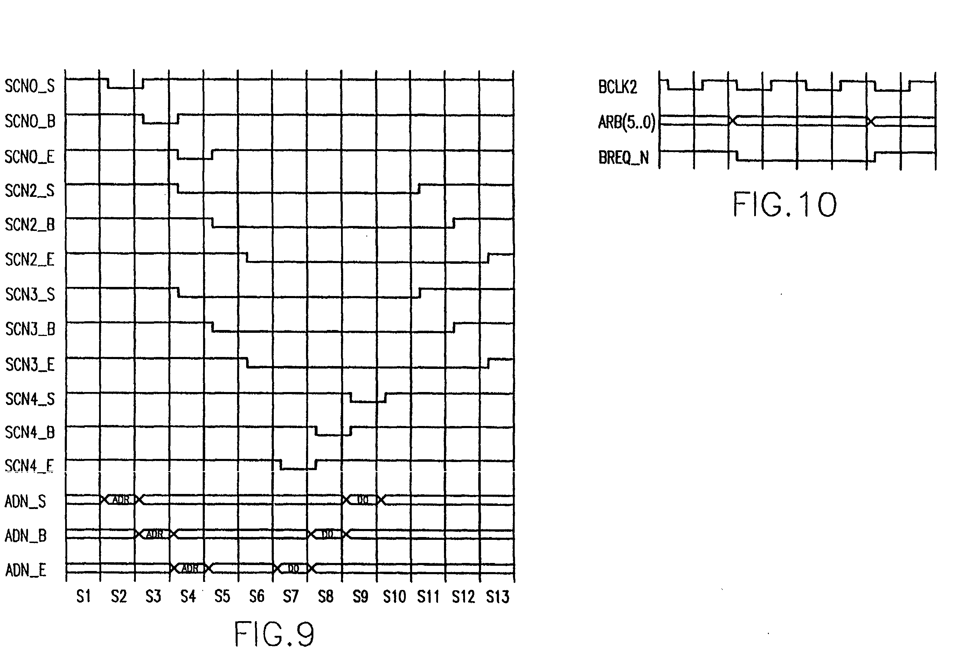

In den Figuren 8 und 9 sind die Timing-Diagramme eines Interconnect-Schreibzugriffes und eines Interconnect-Lesezugriffes gezeigt. Mit diesen Interconnect-Zugriffen kann in einem sogenannten Interconnect-Speicherraum, der an jeder Baugruppe vorgesehen ist, jeweils ein Datenwort eingetragen bzw. ausgelesen werden. Die Speicherzellen dieses Speicherraumes werden mit einer Adresse ADR, die lediglich aus einem Datenwort besteht:, adressiert. Die Interconnect-Zugriffe unterscheiden sich somit von den Referenz-Zugriffen in der Größe der Adresse, wobei der Ablauf der Steuersignale SCO, SCN 2, SCN3, SCN4 und die Übertragung des jeweiligen Datenwortes D0 übereinstimmen.

Der Referenz- und Interconnect-Zugriff ist für Bussysteme, die jeweils mit einem Prozessor versehene Baugruppen verbinden, von untergeordneter Bedeutung, da eine Interprozessor-Kommunikation nur mittels der oben beschriebenen Datenpakete (Messages) möglich ist. Der Referenz- und der Interconnect-Zugriff dienen bei Multiprozessorsystemen lediglich zur Initialisierung und Diagnose des Systems bzw. zur Kommunikation mit Peripheriegeräten, die keine eigene Prozessorsteuerung besitzen.

Zur Entscheidung (Arbitrierung) werden, wie es vom Multibus bekannt ist, die Steuersignale ARB(5..0) und ein Busanfragesignal BREQ (bus request) verwendet. Diese Signale werden im Gegensatz zu den Adress/Datensignalen und den Steuersignalen nicht eingetaktet, da dann die Entscheidungsleitungen nicht in einem wired-or-Modus verwendet werden können, der bei der Entscheidung der Zugriffsrechte ausgenützt wird. Der Datenbustreiber ist daher für diese Signale transparent. Da eine Taktperiode als Signaldurchlaufzeit von einem Controller zum anderen Controller zur Übertragung der Signale nicht genügt, wird der Datenbus mit einer zusätzlichen Taktsignalleitung versehen, an die ein Hilfstakt BCLK2 angelegt wird. Der Hilfstakt BCLK2 (20 MHz) wird durch Teilen der Busfrequenz durch zwei erzeugt.

Die Signale ARB(5..0) und BREQ werden von den Baugruppen in der high-Phase des Hilfstaktes erzeugt und auch in der high-Phase des Hilfstaktes BCLK2 abgefragt. Damit wird sichergestellt, daß den Signalen mindestens zwei Taktperioden der Busfrequenz bzw. des Bustaktes als Signaldurchlaufzeit zur Verfügung stehen.

Wie es in Figur 10 gezeigt ist, werden für das Einschwingen der Entscheidungssignale minimal vier Takte des Bustaktes bzw. zwei Takte des Hilfstaktes verwendet. Dieser dem Entscheidungssignal zum Einschwingen zur Verfügung gestellte Zeitraum kann auf maximal 18 Takte der Busfrequenz verlängert werden.

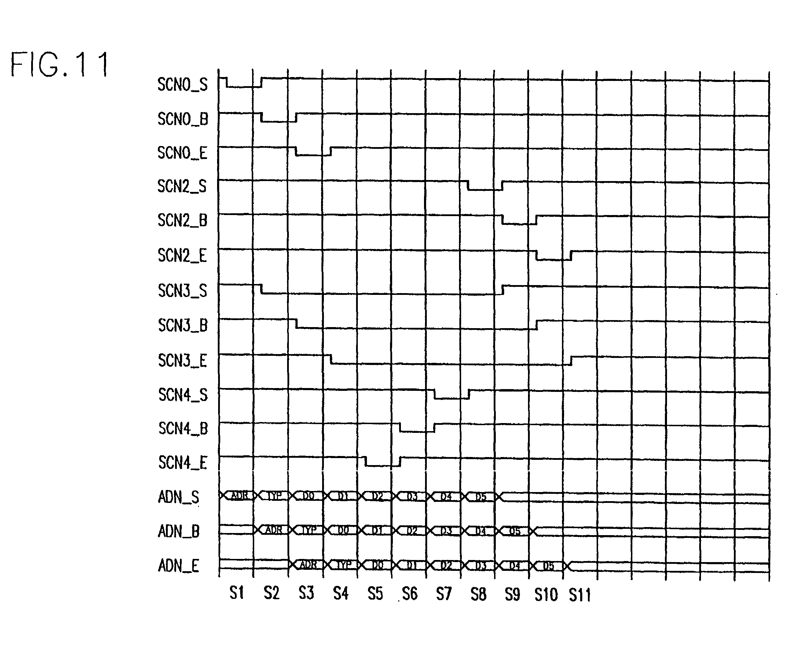

In Figur 11 ist ein Diagramm gezeigt, das den Abbruch einer Datenübertragung aufgrund eines bei der Empfänger-Baugruppe E erzeugten Fehlers zeigt. Wenn die Empfänger-Baugruppe E einen Fehler feststellt, gibt sie mittels der Steuersignale SCN4 bis SCN7 (nicht dargestellt) gleichzeitig mit dem Data-Ready-Signal SCN4 einen Fehlercode aus. Der durch die Signale SCN5 bis SCN7 ausgegebene Fehlercode entspricht dem vom Multibus bekannten Fehlercode.

Wenn die Empfänger-Baugruppe E den Fehlercode erkennt, ändert sie den Datentransfer, indem sie das Steuersignal SCN2 setzt. Der Datentransfer ist beendet, wenn die Empfänger-Baugruppe E das gesetzte Steuersignal SCN2 erkennt.

Gegenüber den bei den Baugruppen erzeugten Fehlern unterscheidet man sogenannte Busfehler, die allgemein im Datenbussystem auftreten. Beim erfindungsgemäßen Datenbus kann das Fehlersignal BUSERR nur von den Baugruppen gesetzt werden, die an dem jeweiligen Datentransfer beteiligt sind, d.h. der Sender-Baugruppe S und der Empfänger-Baugruppe E. Alle anderen mit dem Datenbus verbundenen Baugruppen sind entweder in Ruhe oder befinden sich in der Entscheidungsphase (Arbitrierung). Beim Auftreten eines Busfehlers müssen diese die Arbitrierungsphase verlassen und neu beginnen. Die Baugruppen setzen das Fehlersignal BUSERR, wenn ein Paritätsfehler bei den Adress/Daten- oder Steuersignalen vorliegt oder das Bus-Protokoll bezüglich der Steuersignale verletzt wurde. Dies soll gewährleisten, daß die Daten, die bei einer Baugruppe eintreffen, fehlerfrei sind. Bei einer Datenübertragung mittels eines Datenpaketes, einem schreibenden Interconnect-Zugriff und einem schreibenden Referenz-Zugriff wird das Fehlersignal BUSERR von der Empfänger-Baugruppe erzeugt. Bei einem lesenden Interconnect-Zugriff und einem lesenden Referenz-Zugriff, bei denen ein Datenwort von der Empfänger-Baugruppe zur Sender-Baugruppe übertragen wird, wird das Fehlersignal BUSERR von der Sender-Baugruppe erzeugt.

Bei dem erfindungsgemäßen Datenbus ist zu beachten, daß alle Signale einer Sender-Baugruppe dreimal eingetaktet werden, bevor sie von der Empfänger-Baugruppe verarbeitet werden können. Aus diesem Grund wird ein Busfehler stets zwei oder drei Takte später erkannt, je nach dem ob der Fehler auf der Sender-Baugruppe oder auf dem Datenbus aufgetreten ist. Die Empfänger-Baugruppe setzt in diesem Fall das Fehlersignal BUSERR. Bei einem lesenden Interconnect-Zugriff oder lesenden Referenz-Zugriff tritt der Fehler auf der Empfänger-Baugruppe auf, wobei im Falle eines Fehlers die Sender-Baugruppe das Fehlersignal BUSERR setzt.

Die zeitliche Verzögerung des Fehlersignals wird dadurch berücksichtigt, daß der Controller der Sender-Baugruppe, die ein Datenpaket versendet oder einen Zugriff durchführt, nach dem Ende des Datentransfers noch sechs Takte wartet, bis er der CPU der Baugruppe den Status des Datentransfers mitteilt, da in dieser Zeit noch ein Fehlersignal eintreffen kann.

Da erfindungsgemäß bei jedem Datentransfer lediglich ein einziger Handshake erfolgt, kann lediglich dieser eine Handshake, d.h. das Data-Ready-Signal SCN4 überprüft werden, wodurch sich Änderungen gegenüber dem bekannten Multibus-Protokoll ergeben.

Die Paritätsprüfung erfolgt zu den nachfolgend beschriebenen Zeitpunkten:
1. Steuersignale werden immer überprüft.
2. Adress/Datensignale werden während der Anfragephase (request phase) überprüft.
3. Adress/Datensignale werden während einer auf die Anfragephase folgenden Antwortphase eines Lese-Zugriffes überprüft, wenn SCN4 gesetzt ist und SCN(7..5) nicht gesetzt ist, d.h., wenn ein korrekter Handshake vorliegt.
4. Adress/Datensignale werden während der Antwortphase eines Schreib-Zugriffes geprüft, wenn SCN3 gesetzt ist und SCN(7..5) nicht gesetzt ist, d.h., es liegt ein korrekter Handshake vor.

Eine Datenbusprotokollverletzung wird festgestellt, wenn
1. SCN0 während der Antwortphase gesetzt wird,
2. SCN2 in der Antwortphase gesetzt und SCN3 in der Antwortphase nicht gesetzt wird,
3. SCN5, SCN6 oder SCN7 während der Antwortphase gesetzt werden und SCN4 nicht gesetzt wird,
4. SCN2 sich während der Antwortphase ändert, während SCN3 gesetzt bleibt, und
5. bei einem Datentransfer mittels Datenpaketen mehr Datenworte gesendet werden als während der Konfiguration des Datenbussystems festgelegt worden ist.

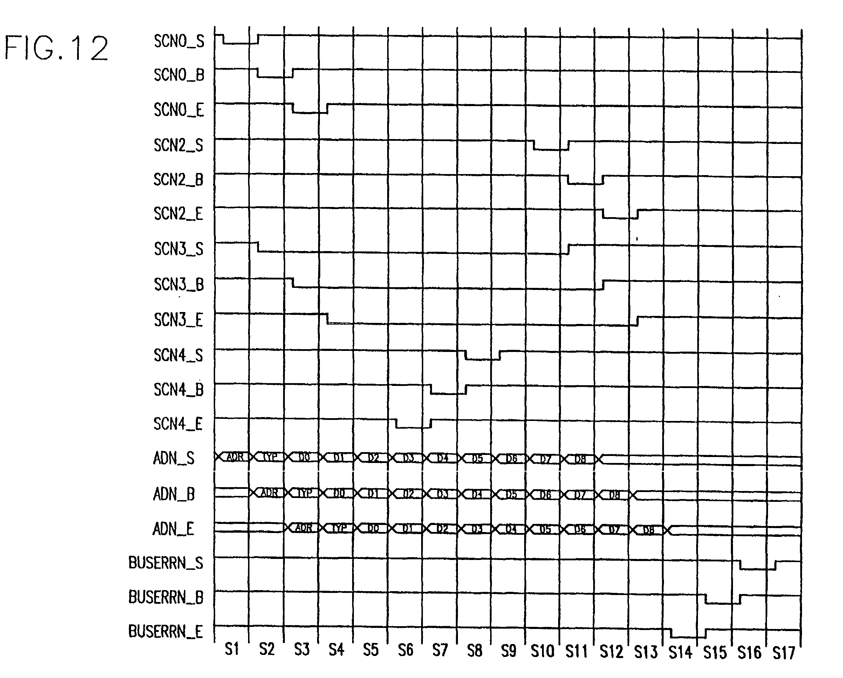

Der in Punkt 5 beschriebene Fehler wird bei dem bekannten Multibus-Protokoll als ein bei einer Baugruppe auftretender Fehler behandelt. Da nach dem Auftreten dieses Fehlers der Datentransfer nicht mehr fortgesetzt werden kann und der Fehler bei dem erfindungsgemäßen Verfahren mit einem einzigen Handshake in der Regel nach dem Handshake auftritt, wird er als Busfehler bewertet. Ein derartiger Busfehler bei einem Datentransfer mittels eines Datenpaketes ist in dem in Figur 12 gezeigten Diagramm dargestellt. Hierbei werden statt acht Datenworte neun Datenworte übertragen. Die Empfänger-Baugruppe setzt daher nach dem achten Datenwort D7 das Fehlersignal BUSERR. Wie aus dem Timing-Diagramm zu entnehmen ist, hat die Sender-Baugruppe den Datentransfer auf ihrer Seite bereits beendet bevor ihr die Empfänger-Baugruppe den Fehler meldet. Aus diesem Grund muß der Controller der Sender-Baugruppe noch sechs Takte warten bis er den Abschluß des Transfers an die CPU der Baugruppe melden kann, da in diesem Zeitraum noch Fehlermeldungen der Empfänger-Baugruppe eintreffen können.

Die Erfindung ist nicht auf ein dem Multibus ähnlichen Datenbus beschränkt, sondern kann bei jedem parallelen Datenbus verwendet werden.

Die Erfindung kann folgendermaßen zusammengefaßt werden:
Sie betrifft einen parallelen Datenbus mit mehreren parallelen Signalleitungen, an welche mehrere Baugruppen anschließbar sind, wobei jede Baugruppe einen unmittelbar mit den Signalleitungen in Verbindung stehenden Datenbustreiber und einen mit dem Datenbustreiber verbundenen Controller aufweist. Dieser Datenbus geht von dem bekannten MULTIBUS II aus. Die Erfindung zeichnet sich dadurch aus, daß die Datenbustreiber mit dem Taktgeber des Datenbusses verbunden sind und die Datenbustreiber so ausgebildet sind, daß die von und zu den Daten- und Steuerleitungen zu übertragenden Signale während eines vom Taktgeber vorgegebenen Taktes aufgenommen und während des nachfolgenden Taktes abgegeben werden. Hierdurch wird die Signalstrecke zwischen zwei über den Datenbus verbundener Baugruppen an den Datenbustreibern jeweils unterbrochen, so daß während eines Taktes des Datenbusses die Signale jeweils einen kürzeren Streckenabschnitt als bei herkömmlichen Datenbussen mit transparenten Datenbustreibern zurücklegen. Hierdurch verringern sich die einzelnen Signallaufzeiten, weshalb die Busfrequenz des Datenbusses und damit der Datendurchsatz erheblich erhöht werden können.

Ferner betrifft die Erfindung ein Verfahren zum Kommunizieren zweier jeweils mit einem Prozessor versehener Baugruppen, wobei zwischen den Baugruppen Datenpakete ausgetauscht werden. Das erfindungsgemäße Verfahren zeichnet sich dadurch aus, daß jedes Datenpaket lediglich durch einen einzigen Handshake quittiert wird. Mit diesem Verfahren können Daten mit maximaler Übertragungsrate am Datenbus übertragen werden.

### Bezugszeichenliste

- 1: Multibus
- 2: Baugruppe
- 3: Datenbustreiber
- 4: Controller
- 5: Datenbus
- 6: Druckersteuerung
- 7: Hochleistungsdrucker
- 8: I/O-Modul
- 9: Rastermodul
- 10: Serialiser-Modul
- 11: Pixel-Bus
- 12: Taktsignalleitung
- 13: Leitungsabschnitt zwischen dem Controller und dem Datenbustreiber in der Sender-Baugruppe
- 14: Leitungsabschnitt zwischen den Datenbustreibern zweier kommunizierender Baugruppen
- 15: Leitungsabschnitt zwischen dem Controller und dem Datenbustreiber in der Empfänger-Baugruppe

## Patentansprüche

1. Paralleler Datenbus mit
mehreren parallelen Signalleitungen, an welche mehrere Baugruppen (2) anschließbar sind, wobei jede Baugruppe (2) einen unmittelbar mit den Signalleitungen in Verbindung stehenden Datenbustreiber (3) und einen mit dem Datenbustreiber (3) verbundenen Controller (4) aufweist, wobei eine Teilzahl der Signalleitungen Datenleitungen zum Übertragen der Daten und Steuerleitungen zum Steuern der Datenübertragung der Daten über die Datenleitungen darstellt, und
einem Taktgeber zum Erzeugen einer vorbestimmten Busfrequenz, mit welcher die in den Signalleitungen übertragenen Signale getaktet sind,
**dadurch gekennzeichnet,**
**daß** die Datenbustreiber (3) mit dem Taktgeber verbunden sind und die Datenbustreiber (3) so ausgebildet sind, daß die von und zu den Daten- und Steuerleitungen zu übertragenden Signale während eines vom Taktgeber vorgegebenen Taktes aufgenommen und während des nachfolgenden Taktes abgegeben werden.

2. Paralleler Datenbus nach Anspruch 1,
**dadurch gekennzeichnet,**
**daß** der Taktgeber eine Busfrequenz von zumindest 20 MHz erzeugt.

3. Paralleler Datenbus nach Anspruch 1,
**dadurch gekennzeichnet,**
**daß** der Taktgeber eine Busfrequenz von etwa 40 MHz erzeugt.

4. Paralleler Datenbus nach einem der Ansprüche 1 bis 3,
**dadurch gekennzeichnet,**
**daß** der Datenbus 32 Datenleitungen aufweist:.

5. Paralleler Datenbus nach einem der Ansprüche 1 bis 4,
**dadurch gekennzeichnet,**
**daß** eine weitere Teilzahl der Signalleitungen als Entscheidungsleitungen ausgebildet sind zum Entscheiden, welche mit den Signalleitungen verbundene Baugruppe Zugriffspriorität aufweist, wobei die Entscheidungsleitungen mit nicht getakteten Open-Drain-Ausgängen der jeweiligen Datenbustreiber (3) verbunden sind, so daß sie eine wired-or-Logik bilden.

6. Paralleler Datenbus nach Anspruch 5,
**dadurch gekennzeichnet,**
**daß** zur Ansteuerung der Entscheidungsleitungen eine Einrichtung zum Erzeugen eines Hilfstaktes (BCLK2) mit einer geringeren Frequenz als der Busfrequenz vorgesehen ist.

7. Paralleler Datenbus nach Anspruch 6,
**dadurch gekennzeichnet,**
**daß** die Einrichtung zum Erzeugen eines Hilfstaktes ein Frequenzteiler ist.

8. Paralleler Datenbus nach einem der Ansprüche 1 bis 7,
**dadurch gekennzeichnet,**
**daß** die zum Controller (4) führenden Ausgänge des Datenbustreibers (3) als Low-Voltage-TTL-Ausgänge ausgebildet sind.

9. Paralleler Datenbus nach einem der Ansprüche 1 bis 8,
**dadurch gekennzeichnet,**
**daß** die Signalleitungen eine physikalische Ausdehnung von zumindest 40 cm aufweisen.

10. Paralleler Datenbus nach einem der Ansprüche 1 bis 8,
**dadurch gekennzeichnet,**
**daß** die Signalleitungen eine physikalische Ausdehnung von zumindest 50 cm aufweisen.

11. Paralleler Datenbus nach einem der Ansprüche 1 bis 10,
**dadurch gekennzeichnet,**
**daß** mehrere der mit den Signalleitungen verbundene Baugruppen (2) mit jeweils einem Prozessor versehen sind.

12. Paralleler Datenbus nach einem der Ansprüche 1 bis 11,
**dadurch gekennzeichnet,**
**daß** der Datenbus (5) Multibus-kompatibel ist.

13. Verfahren zum Kommunizieren zweier jeweils mit einem Prozessor versehener Baugruppen (2) mittels eines parallelen Datenbusses (5) nach einem der Ansprüche 1 bis 12, wobei zwischen den beiden Baugruppen (2) Datenpakete (Messages) ausgetauscht werden,
**dadurch gekennzeichnet,**
**daß** jedes Datenpaket lediglich durch einen einzigen Handshake quittiert wird.

14. Verfahren nach Anspruch 13,
**dadurch gekennzeichnet,**
**daß** ein Handshake jeweils ein Data-Ready-Signal (SCN3) der Sender-Baugruppe (2) und ein Data-Ready-Signal (SCN4) der Empfänger-Baugruppe (2) umfaßt, wobei zu Beginn des Datentransfers das Data-Ready-Signal (SCN3) der Sender-Baugruppe (2) an die Empfänger-Baugruppe (2) gesandt wird, und nach dem Empfang des Data-Ready-Signals (SCN3) der Sender-Baugruppe (2) die Empfänger-Baugruppe ihr Data-Ready-Signal (SCN4) an die Empfänger-Baugruppe (2) sendet.

15. Verfahren nach Anspruch 14,
**dadurch gekennzeichnet,**
**daß** die Sender-Baugruppe (2) ihr Data-Ready-Signal (SCN3) nur aussendet, wenn das vollständige Datenpaket auf dieser Baugruppe (2) vorhanden ist.

16. Verfahren nach Anspruch 14 oder 15,
**dadurch gekennzeichnet,**
**daß** die maximale Größe der Datenpakete auf einen vorbestimmten Wert festgelegt ist, und
die Empfänger-Baugruppe (2) ihr Data-Ready-Signal (SCN4) nur aussendet, wenn genügend freier Speicherplatz auf der Empfänger-Baugruppe (2) vorhanden ist.

17. Verfahren nach Anspruch 16,
**dadurch gekennzeichnet,**
**daß** die maximale Größe der Datenpakete auf 32 Byte, 64 Byte, 96 Byte oder 128 Byte festgelegt ist.

18. Druckersteuerung für Hochleistungsdrucker, mit
einem I/0-Modul (8), einem oder mehreren Rastermodulen (9) und einem Serialiser-Modul (10), wobei die Module (8 bis 10) jeweils einen Prozessor aufweisen,
**dadurch gekennzeichnet,**
**daß** die Module mit einem parallelen Datenbus nach einem der Ansprüche 1 bis 12 verbunden sind.

## Claims

1. Parallel data bus having
a plurality of parallel signal lines to which a plurality of assemblies (2) can be connected, wherein each assembly (2) has a data bus driver (3) being in immediate connection with the signal lines, and has a controller (4) that is connected to the data bus driver (3), wherein a sub-number of the signal lines represents data lines for transmitting the data and control lines for controlling the data transmission of the data via the lines, and
a clock generator for generating a predetermined bus frequency, with which the signals transmitted in the signal lines are clocked,
**characterized in that**
the data bus drivers (3) are connected to the clock generator and the data bus drivers (3) are fashioned such that the signals to be transmitted from and to the data and control lines are accepted during a clock pulse prescribed by the clock generator, and are emitted during the following clock pulse.

2. Parallel data bus according to claim 1,
**characterized in that**
the clock generator generates a bus frequency of at least 20 MHz.

3. Parallel data bus according to claim 1,
**characterized in that**
the clock generator generates a bus frequency of approximately 40 MHz.

4. Parallel data bus according to one of the claims 1 to 3,
**characterized in that**
the data bus has 32 data lines.

5. Parallel data bus according to one of the claims 1 to 4,
**characterized in that**
a further sub-number of the signal lines is fashioned as decision lines for deciding which assembly connected to the signal lines has access priority, the decision lines being connected to non-clocked open-drain outputs of the respective data bus drivers (3) so that they form a wired-or logic.

6. Parallel data bus according to claim 5,
**characterized in that**
a device for generating an auxiliary clock pulse (BCLK2) with a lower frequency than the bus frequency is provided for driving the decision lines.

7. Parallel data bus according to claim 6,
**characterized in that**
the device for generating an auxiliary clock pulse is a frequency divider.

8. Parallel data bus according to one of the claims 1 to 7,
**characterized in that**
the outputs of the data bus driver (3) leading to the controller (4) are fashioned as low-voltage TTL outputs.

9. Parallel data bus according to one of the claims 1 to 8,
**characterized in that**
the signal lines have a physical expanse of at least 40 cm.

10. Parallel data bus according to one of the claims 1 to 8,
**characterized in that**
the signal lines have a physical expanse of at least 50 cm.

11. Parallel data bus according to one of the claims 1 to 10,
**characterized in that**
a plurality of the assemblies (2) that are connected to the signal lines are respectively provided with a processor.

12. Parallel data bus according to one of the claims 1 to 11,
**characterized in that**
the data bus (5) is multibus-compatible.

13. Method for the communication of two assemblies (2), which are each provided with a processor, by means of a parallel data bus (5) according to one of the claims 1 to 12, data packets (messages) being exchanged between the two assemblies (2),
**characterized in that**
each data packet is acknowledged by only one single handshake.

14. Method according to claim 13,
**characterized in that**
a handshake respectively comprises a data-ready signal (SCN3) of the transmitter assembly (2) and a data-ready signal (SCN4) of the receiver assembly (2), the data-ready signal (SCN3) of the transmitter assembly (2) being sent to the receiver assembly (2) at the beginning of the data transfer, and the receiver assembly sends its data-ready signal (SCN4) to the receiver assembly (2) after the data-ready signal (SCN3) of the transmitter assembly (2) has been received.

15. Method according to claim 14,
**characterized in that**
the transmitter assembly (2) only sends its data-ready signal (SCN3) when the complete data packet is present on this assembly (2).

16. Method according to claim 14 or 15,
**characterized in that**
the maximum size of the data packets is set to a predetermined value, and the receiver assembly (2) only sends its data-ready signal (SCN4) when there is sufficient storage space on the receiver assembly (2).

17. Method according to claim 16,
**characterized in that**
32 byte, 64 byte, 96 byte or 128 byte are determined as the maximum size of the data packets.

18. Printer control unit for high-performance printers having
an I/O-module (8), one or more raster modules (9) and a serializer module (10), the modules (8 to 10) each having a processor,
**characterized in that**
the modules are connected to a parallel data bus according to one of the claims 1 to 12.

## Revendications

1. Bus de données en parallèle comportant
plusieurs lignes de signaux en parallèle auxquelles peuvent être raccordés plusieurs modules (2), chaque module (2) comportant un circuit d'attaque de bus de données (3) en liaison directe avec les lignes de signaux et un circuit de commande (4) relié au circuit (3) d'attaque de bus de données, une partie des lignes de signaux étant des lignes de données destinées à transférer les données et des lignes de commande destinées à commander le transfert de données sur les lignes de données, et
un circuit d'horloge destiné à générer une fréquence de bus prédéterminée au moyen de laquelle les signaux transférés sur les lignes de signaux sont synchronisés, **caractérisé en ce que**
les circuits (3) d'attaque de bus de données sont reliés au circuit d'horloge, et les circuits (3) d'attaque de bus de données sont conformés de telle sorte que les signaux à transférer depuis les lignes de données et de commande, et vers celles-ci, sont reçus pendant une période prédéterminée par le circuit d'horloge et sont délivrés pendant la période suivante.

2. Bus de données en parallèle selon la revendication 1, **caractérisé en ce que** le circuit d'horloge génère une fréquence de bus d'au moins 20 MHz.

3. Bus de données en parallèle selon la revendication 1, **caractérisé en ce que** le circuit d'horloge génère une fréquence d'environ 40 MHz.

4. Bus de données en parallèle selon l'une des revendications 1 à 3, **caractérisé en ce que** le bus de données possède 32 lignes de données.

5. Bus de données en parallèle selon l'une des revendications 1 à 4, **caractérisé en ce qu'**une autre partie des lignes de signaux se présente sous la forme de lignes de décision destinées à décider quel module relié aux lignes de signaux a la priorité d'accès, lesdites lignes de décision étant reliées à des sorties collecteurs ouverts non synchronisées du circuit (3) d'attaque de bus de données correspondant, de façon à former une logique OU câblée.

6. Bus de données en parallèle selon la revendication 5, **caractérisé en ce que**, pour commander les lignes de décision, il est prévu un dispositif pour générer un signal d'horloge auxiliaire (BCLK2) dont la fréquence est inférieure à la fréquence de bus.

7. Bus de données en parallèle selon la revendication 6, **caractérisé en ce que** le dispositif pour générer un signal d'horloge auxiliaire est un diviseur de fréquence.

8. Bus de données selon l'une des revendications 1 à 7, **caractérisé en ce que** les sorties du diviseur de fréquence (3) qui mènent au circuit de commande (4) se présentent sous la forme de sorties TTL basse tension.

9. Bus de données selon l'une des revendications 1 à 8, **caractérisé en ce que** les lignes de signaux ont une dimension physique d'au moins 40 cm.

10. Bus de données en parallèle selon l'une des revendications 1 à 8, **caractérisé en ce que** les lignes de signaux ont une dimension physique d'au moins 50 cm.

11. Bus de données selon l'une des revendications 1 à 10, **caractérisé en ce que** plusieurs des modules (2) reliés aux lignes de signaux sont dotés chacun d'un processeur.

12. Bus de données en parallèle selon l'une des revendications 1 à 11, **caractérisé en ce que** le bus de données (5) est compatible pour plusieurs bus.

13. Procédé pour faire communiquer deux modules (2), dotés chacun d'un processeur, au moyen d'un bus de données (5) selon l'une des revendications 1 à 12, dans lequel des paquets de données (messages) sont échangés entre les deux modules (2), **caractérisé en ce que** la réception de chaque paquet de données est confirmée tout simplement par un protocole de transfert unique.

14. Procédé selon la revendication 13, **caractérisé en ce qu'**une protocole de transfert comporte à chaque fois un signal « prêt pour les données » (SCN3) du module émetteur (2), et un signal « prêt pour les données » (SCN4) du module récepteur (2), le signal « prêt pour les données » (SCN3) du module émetteur (2) étant envoyé au début du transfert des données au module récepteur (2), et, après la réception du signal « prêt pour les données » (SCN3) du module émetteur (2), le module récepteur envoie son signal « prêt pour les données » (SCN4) au module récepteur (2).

15. Procédé selon la revendication 14, **caractérisé en ce que** le module émetteur (2) n'envoie son signal « prêt pour les données » (SCN3) que lorsque le paquet de données complet est présent dans ce module (2).

16. Procédé selon la revendication 14 ou 15, **caractérisé en ce que** la taille maximale des paquets de données est fixée à une valeur déterminée, et le module récepteur (2) n'envoie son signal « prêt pour les données » (SCN4) que lorsque le module récepteur (2) a suffisamment de mémoire disponible.

17. Procédé selon la revendication 16, **caractérisé en ce que** la taille maximale des paquets de données est fixée à 32 octets, 64 octets, 96 octets ou 128 octets.

18. Dispositif de commande d'un appareil d'impression à grande vitesse comportant un module d'entrée-sortie (8), un ou plusieurs module de trame (9) et un module de mise en série (10), dans lequel les modules (8 à 10) comportent chacun un processeur, **caractérisé en ce que** les modules sont reliés à un bus de données en parallèle selon l'une des revendications 1 à 12.
